# EUROPEAN PATENT APPLICATION

(11) **EP 3 407 566 A1**
(43) Date of publication of application: **28.11.2018**
(21) Application number: 16886127.6
(22) Date of filing: 19.12.2016
(51) Int. Cl.: H04L 29/08, B60R 16/023

(54) **AUTOMOBILE ELECTRICAL SYSTEM AND ISOLATION SYSTEM FOR AUTOMOBILE ELECTRICAL SYSTEM**

(30) Priority: 22.01.2016 CN 201610045330
(71) Applicant: Nio Nextev Limited, Central, Hong Kong (CN)
(72) Inventor: HU, Mingyin, Central Hong Hong Kong (CN); TANG, Edision, Central Hong Hong Kong (CN); HE, Bin, Central Hong Hong Kong (CN)
(74) Representative: Vossius & Partner Patentanwälte Rechtsanwälte mbB
(86) International application number: PCT/CN2016/110656
(87) International publication number: WO 2017/124867

(57) **Abstract**

An automobile electrical system, intended to solve the problem that the existing automobile bus system has low efficiency and poor security in terms of the communication of different bus modules. For this purpose, the automobile electrical system comprises a gateway and a plurality of CAN buses connected to the gateway in parallel, wherein at least one module is connected to each of the CAN buses in parallel; and the automobile electrical system further comprises an ICAN isolation bus, wherein the ICAN isolation bus is arranged between at least two buses of the CAN buses and is used for connecting a module on one CAN bus to a module on another CAN bus. Further disclosed are an isolation system for an automobile electrical system and a method for isolating an automobile electrical system. It would be readily understood by a person skilled in the art that since an ICAN isolation bus is arranged between different CAN buses, modules on different buses can directly communicate with each other via the ICAN isolation bus, without using buses and gateways where the modules are located, thereby not only saving communication lines, but also avoiding communication leakage or communication unavailability caused by a CAN bus fault or a gateway fault, etc.

## Description

### Technical Field

The invention relates to an automobile circuit, and particularly provides an automobile electrical system and an isolation system for the automobile electrical system.

### Background Art

The automobile bus system essentially uses a certain communication protocol (such as a CAN protocol) to link various ECU nodes inside an automobile, so as to form a local area network inside the automobile. The nodes complete predetermined control functions and actions, such as lighting on and off and motor starting and stopping, according to information from their own sensors and information from a bus, and the communication between the nodes is realized through the bus. Each node is generally composed of an MCU (or DSP, etc.), an interface circuit, a bus controller, a bus driver, etc. So far, there have been a variety of bus standards for the automobiles, which may be divided into two categories from the point of view of the functions achieved by the bus. One is a control strategy-driven bus, such as J1850 from SAE, ABUS from German Volkswagen, CAN, ISO11898 and ISO11519 from Bosch, Auto CAN from American IBM, VAN from ISO, PALMNET from Mazda, and LIN for low-speed applications. The other is a multimedia bus for the purpose of mass data transmission, such as IDB-C, IDB-1394, MOST, and AMIC-C.

As a prior art, CN 101350756 A discloses a CAN bus communication system. The CAN bus communication system is composed of a CAN bus and a LIN bus and has a total of five network channels, and the network channels are connected to each other through a gateway to achieve information sharing. However, there are some problems with this prior art. Specifically, when a module on a bus needs to communicate with a module on another bus, communication information from the module always needs to be transmitted to the gateway via its own bus and then transmitted to the bus where the target module is located via the gateway. As a result, on the one hand too many communication lines are occupied, and on the other hand there are security risks. More specifically, when any of the buses or the gateway fails or is maliciously intruded, the communication between different modules on the two buses may fail or be stolen or tampered with.

Therefore, there is a need in the art for a new automobile electrical system to solve these problems.

### Summary of the Invention

The invention is intended to solve the above-mentioned problems in the prior art, that is, intended to solve the problems of low efficiency and poor security in the communication between modules on different buses of the existing automobile bus system. For this purpose, the invention provides an automobile electrical system. The automobile electrical system comprises a gateway and a plurality of buses connected to the gateway in parallel, with at least one module being connected to each of the buses in parallel, wherein the automobile electrical system further comprises an isolation system arranged between at least two of the buses and used for connecting a module on one of the buses to a module on another of the buses.

In a preferred embodiment of the automobile electrical system described above, the buses are CAN buses, and/or the isolation system is an ICAN isolation bus.

In a preferred embodiment of the automobile electrical system described above, the ICAN isolation bus interconnects modules on at least two of a power bus, a body bus, and an ADAS bus.

In a preferred embodiment of the automobile electrical system described above, the module located on the power bus and connected to the ICAN isolation bus comprises at least one of a VCU module, an MCU module and a BMS module.

In a preferred embodiment of the automobile electrical system described above, the module located on the body bus and connected to the ICAN isolation bus comprises an ESP module.

In a preferred embodiment of the automobile electrical system described above, the module located on the ADAS bus and connected to the ICAN isolation bus comprises an ADAS module.

In a preferred embodiment of the automobile electrical system described above, a CAN transceiver is provided on a controller of each of the modules.

According to a further aspect of the invention, provided is an isolation system for an automobile electrical system, the automobile electrical system comprising a gateway and a plurality of buses connected to the gateway in parallel, with at least one module being connected to each of the buses in parallel, wherein the isolation system is arranged between at least two of the buses and used for connecting a module on one of the buses to a module on another of the buses.

In a preferred embodiment of the isolation system described above, the buses are CAN buses, the isolation system is an ICAN isolation bus, and the ICAN isolation bus interconnects modules on at least two of a power bus, a body bus and an ADAS bus.

According to a still further aspect of the invention, provided is a method for isolating an automobile electrical system, the automobile electrical system comprising a gateway and a plurality of CAN buses connected to the gateway in parallel, with at least one module being connected to each of the CAN buses in parallel, wherein the method comprises connecting a module on one of the CAN buses to a module on another of the CAN buses via an ICAN isolation bus.

Those skilled in the art can readily understand that since an ICAN isolation bus is arranged between different CAN buses, modules on different buses can directly communicate with each other via the ICAN isolation bus, without using the buses where the modules are located and the gateway, thereby not only significantly saving on communication lines, but also avoiding situations in which communication is subjected to leakage or cannot be performed due to a fault of some of the CAN buses or of the gateway, etc., so that the safety of the automobile internal communication is significantly improved.

### Brief Description of the Drawings

Fig. 1 is a topological diagram of an automobile bus system in the prior art.
Fig. 2 is a topological diagram of an automobile bus system of the invention.
Fig. 3 is a structural schematic diagram of a module in the automobile bus system of the invention.
Fig. 4 is a partially enlarged diagram of the automobile bus system of the invention.

### Detailed Description of the Embodiments

The preferred embodiments of the invention are described below with reference to the accompanying drawings. It should be understood by those skilled in the art that these embodiments are only used for explaining the technical principle of the invention, and are not intended to limit the scope of protection of the invention. By way of example, although the present application is described in conjunction with an automobile bus system, those skilled in the art can readily understand that the invention may obviously be applied to any other type of vehicle electrical system without departing from the basic principles of the invention.

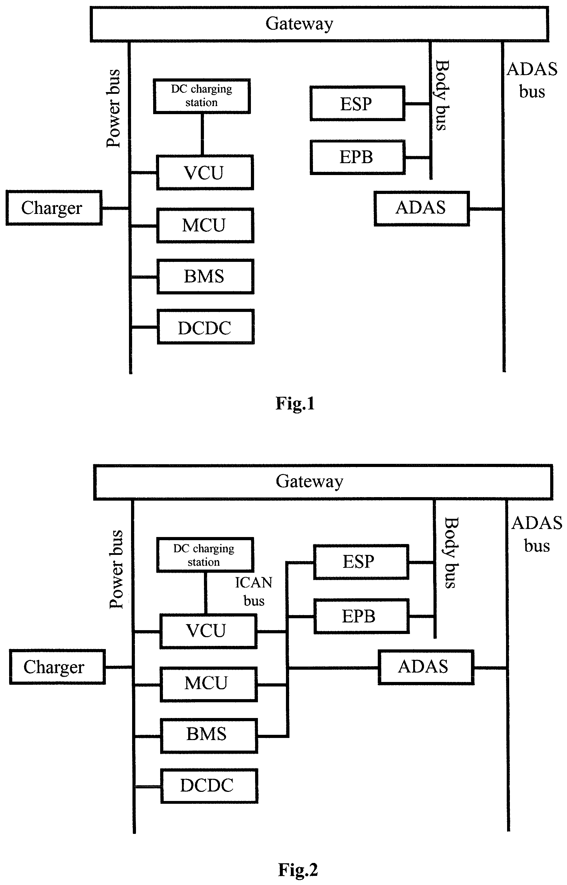

Referring first to Fig. 1, a topological diagram of an automobile bus system in the prior art is shown. As shown in Fig. 1, the automobile bus system comprises three buses, that is, a power bus, a body bus, and an ADAS (i.e., Advanced Driver Assistant System, ADAS for short) bus. The three buses share information through a gateway connection. As described in the section of background art, there are some problems with this system. By way of example, when a VCU (Vehicle Control Unit) module on the power bus needs to communicate with an ESP (Electronic Stability Program) module on the body bus, the information must be transmitted to the gateway via the power bus where the VCU module is located, and then transmitted to the body bus where the ESP module is located via the gateway. As a result, not only too many communication lines are occupied, but also when any one of the power bus and the body bus or the gateway fails or is maliciously invaded, the communication between the VCU module and the ESP module may fail or be stolen or tampered with.

Referring to Fig. 2 below, a topological diagram of an automobile bus system of the invention is shown. As shown in Fig. 2, the automobile electrical system of the invention also comprises a gateway, and a power bus, a body bus and an ADAS bus connected to the gateway in parallel, and at least one module is connected to each of the buses in parallel. In the embodiment as shown in Fig. 2, the power bus is connected with a VCU module, an MCU (Microcontroller Unit) module, a BMS (Battery Management System) module, a DCDC (Direct Current to Direct Current converter) module, and a charger. The VCU module is further connected with a DC charging station. The body bus is connected with an ESP module and an EPB (Electronic Parking Brake) module. The ADAS bus is connected with an ADAS module. It should be noted that the specific modules and number of the modules as shown in Fig. 2 are merely exemplary, and those skilled in the art would provide different, more or fewer modules as needed.

With continued reference to Fig. 2, the automobile electrical system of the invention is characterized by further comprising an ICAN isolation bus (Isolation CAN Bus). As an example, the ICAN isolation bus in Fig. 2 is arranged between the power bus, the body bus and the ADAS bus and used for connecting a module on one of the buses to a module on another of the buses. In the exemplary embodiment of Fig. 2, the modules located on the power bus and connected to the ICAN isolation bus comprise a VCU module, an MCU module and a BMS module, the module located on the body bus and connected to the ICAN isolation bus is an ESP module, and the module located on the ADAS bus and connected to the ICAN isolation bus is an ADAS module. Regarding the ICAN isolation bus, it should be noted that the bus is referred to as "isolation bus" because the bus directly connects the modules on the other buses and isolates these modules relative to the gateway. Of course, the ICAN isolation bus may also be referred to as a "short circuit bus" because the bus directly connects the modules on different buses without going through the gateway. In addition, the specific modules and number of the modules connected to the ICAN isolation bus as shown in Fig. 2 are merely exemplary, and those skilled in the art would connect different, more or fewer modules according to specific applications, which does not depart from the basic principles of the invention and therefore will also fall within the scope of protection of the invention.

On the basis of Fig. 2, the invention further provides an isolation system for an automobile bus system, the automobile bus system comprising a gateway, and a power bus, a body bus and an ADAS bus connected to the gateway in parallel, and at least one module being connected to each of the buses in parallel. The isolation system is characterized in that it is arranged between at least two of the buses and used for connecting a module on one of the buses to a module on another of the buses. Preferably, the buses are CAN buses, the isolation system is an ICAN isolation bus, and the ICAN isolation bus interconnects modules on at least two of the power bus, the body bus and the ADAS bus. Furthermore, the invention further provides a method for isolating an automobile bus system, the automobile bus system comprising a gateway, and a power bus, a body bus and an ADAS bus connected to the gateway in parallel, and at least one module being connected to each of the buses in parallel. The method is characterized by comprising the following step: connecting a module on one of the three buses to a module on another of the buses via an ICAN isolation bus.

Those skilled in the art would understand that the isolation system of the invention provides double protection for the automobile bus system. If the gateway is maliciously invaded, the information on the bus (the power bus, the body bus, or the ADAS bus) may be modified, resulting in an error and an unintentional operation. When an individual module detects the error information, a set security action will be taken. If the error information occurs in front and rear motor control systems, the controller may stop the motor output to prevent accidents. This unintentional operation may lead to safety hazards for the driver, and at this moment the isolation system can protect important information during transferring. The important modules are connected to the ICAN isolation bus to protect the important information and prevent a non-user (a hacker) from controlling the modules, and for controlling and operating the individual modules, each of the modules can be correctly instructed and controlled only by providing the positioning of the CAN communication protocol.

In addition, an information sending priority is provided in CAN communication, the set priority value cannot be modified, and the smaller the value, the higher the priority. Connecting the important module to the ICAN isolation bus can share the load rate of the power bus, the body bus or the ADAS bus while reducing the delay rate at which the information needs to be forwarded to the specified module through the gateway. Further, the ICAN isolation bus can also improve the stability of the system, and can assign an individual module to work, while the other modules can enter a power saving mode, making the entire system more energy-efficient. For example, a DC charging station can only wake up the VCU module, and the other modules remain in a sleep mode.

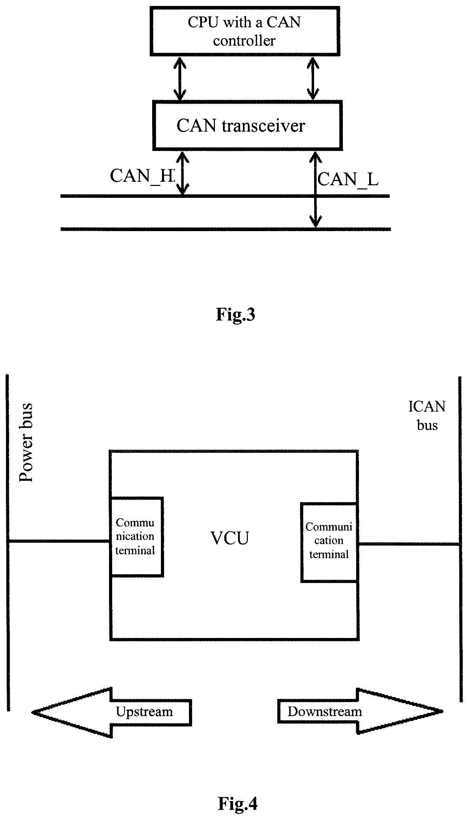

Next, referring to Fig. 3, a schematic diagram of a module in the automobile bus system of the invention is shown. As shown in Fig. 3, in order to enable independent communication of the modules on the different buses, the controller of each module of the invention is provided with a CAN transceiver. Compared with a module provided with an independent CAN controller, such an arrangement of the invention enables the modules on the different buses to communicate via the ICAN isolation bus, thereby further saving on output and input port resources and simplifying the circuit structure.

Finally, referring to Fig. 4, a partially enlarged diagram of the automobile bus system of the invention is shown. As shown in Fig. 4, according to the technical solution of the invention, upstream and downstream signals are respectively marked in the CAN communication protocol, the upstream information holds ID2 while the downstream information holds ID1, and the information each has the highest priority value on the CAN bus, so as to avoid communication failure because the CAN bus is occupied by signals with higher priority values, so that important information can be sent from both sides at the same time, reducing the bus load and reducing the delay rate. In addition, the delay rate may be caused by an error frame in the CAN communication. When the information is sent incorrectly, the system will enter an error counting process, and a counter will be incremented upon sending an error, until the module is turned off (Bus Off). The specific bus is always occupied until Bus Off, resulting in that the other modules cannot be used. However, according to the technical solution of the invention, if the power bus is occupied due to the error count, the vehicle control unit (VCU) can transmit an emergency fault instruction via the ICAN isolation bus to protect the driver's safety.

Heretofore, the technical solutions of the invention have been described with reference to the preferred embodiments shown in the accompanying drawings. However, those skilled in the art can readily understand that the protection scope of the invention is obviously not limited to these specific embodiments. Without departing from the principles of the invention, those skilled in the art may make equivalent modifications or substitutions to related technical features, and the technical solutions after these modifications or substitutions shall fall within the scope of protection of the invention.

## Claims

1. An automobile electrical system comprising a gateway and a plurality of buses connected to the gateway in parallel, with at least one module being connected to each of the buses in parallel,
wherein the automobile electrical system further comprises an isolation system arranged between at least two of the buses and used for connecting a module on one of the buses to a module on another of the buses.

2. The automobile electrical system according to claim 1, wherein the buses are CAN buses, and/or the isolation system is an ICAN isolation bus.

3. The automobile electrical system according to claim 2, wherein the ICAN isolation bus interconnects modules on at least two of a power bus, a body bus, and an ADAS bus.

4. The automobile electrical system according to any one of claims 1 to 3, wherein the module located on the power bus and connected to the ICAN isolation bus comprises at least one of a VCU module, an MCU module and a BMS module.

5. The automobile electrical system according to claim 4, wherein the module located on the body bus and connected to the ICAN isolation bus comprises an ESP module.

6. The automobile electrical system according to claim 5, wherein the module located on the ADAS bus and connected to the ICAN isolation bus comprises an ADAS module.

7. The automobile electrical system according to claim 6, wherein a CAN transceiver is provided on a controller of each of the modules.

8. An isolation system for an automobile electrical system, the automobile electrical system comprises a gateway and a plurality of buses connected to the gateway in parallel, with at least one module being connected to each of the buses in parallel,
wherein the isolation system is arranged between at least two of the buses and used for connecting a module on one of the buses to a module on another of the buses.

9. The insulation system for an automobile electrical system according to claim 8, wherein the buses are CAN buses, the isolation system is an ICAN isolation bus, and the ICAN isolation bus interconnects modules on at least two of a power bus, a body bus and an ADAS bus.

10. A method for isolating an automobile electrical system, the automobile electrical system comprises a gateway and a plurality of CAN buses connected to the gateway in parallel, with at least one module being connected to each of the CAN buses in parallel,
wherein the method comprises connecting a module on one of the CAN buses to a module on another of the CAN buses via an ICAN isolation bus.
